# EUROPÄISCHE PATENTANMELDUNG

(11) **EP 1 686 541 A2**
(43) Veröffentlichungstag der Anmeldung: **02.08.2006**
(21) Anmeldenummer: 06000489.2
(22) Anmeldetag: 11.01.2006
(51) Int. Cl.: G07C 9/00, G07F 7/08, G07D 7/00

(54) **Identifizierungssystem**

(30) Priorität: 26.01.2005 DE 102005003647
(71) Anmelder: Giesecke & Devrient GmbH, 81677 München (DE)
(72) Erfinder: Schiller, Christoph, Dr., 81667 München (DE); Wacker, Dirk, Dr., 81371 München (DE); Urmann, Jens, Dr., 80796 München (DE); Meister, Gisela, 81737 München (DE)

(57) **Zusammenfassung**

Die Erfindung schafft ein Identifizierungssystem mit einem einen ersten elektronischen Speicher (101; 201) aufweisenden Identifikationsdokument (100; 200) und mit Autorisierungsdaten zum Zugreifen auf den elektronischen Speicher (101; 201), wobei die Autorisierungsdaten in elektronischer Form vorgesehen sind. Verfahren zum Auslesen von Identifikationsdaten aus dem Identifikationsdokument (100; 200), Verfahren zur Zugangskontrolle und Verfahren zur Personenverfolgung werden ebenfalls angegeben. Weiter wird die Verwendung eines Reisepasses zur Zugangskontrolle angegeben. Wahlweise wird bei den erfindungsgemäßen Verfahren ein Identifikationsdokument verwendet, durch das ein Teil einer externen Authentisierungs-Infrastruktur gebildet ist.

## Beschreibung

Die Erfindung betrifft ein Identifizierungssystem mit einem einen elektronischen Speicher aufweisenden Identifikationsdokument und mit Autorisierungsdaten zum Zugreifen auf den elektronischen Speicher. Weiter betrifft die Erfindung Verfahren zur Freischaltung des Zugangs zu einem zugangsgesicherten Bereich und zur Personenverfolgung. Insbesondere betrifft die Erfindung Identifizierungssysteme mit einem Identifikationsdokument, das als Ausweisdokument, insbesondere Reisedokument oder Personalausweis, mit Chip gestaltet ist.

Ein Beispiel für ein solches Identifizierungssystem ist ein Reisepass mit Chip, bei dem der Zugriff auf den Chip mit Autorisierungsdaten (z.B. mit einem Zugriffsschlüssel) abgesichert ist. Im Chip sind als Identifikationsdaten beispielsweise biometrische Daten des Passinhabers abgespeichert, beispielsweise ein digitalisiertes Passbild und ein oder mehrere Fingerabdrücke. Um Zugriffe auf den Chip zu ermöglichen, hat der Reisepass eine Antenne als Kontaktmittel zur kontaktlosen Kontaktierung. Herkömmlicherweise ist auf einer Oberfläche des Reisepasses ein maschinenlesbares Feld vorgesehen, in dem Autorisierungsdaten zum Zugreifen auf den Chip aufgedruckt sind. Bevor auf den Chip zugegriffen werden kann, muss gegenüber dem Chip der Nachweis erbracht werden, dass Kenntnis von den Autorisierungsdaten erlangt worden ist. Hierzu werden die Autorisierungsdaten aus dem maschinenlesbaren Feld ausgelesen, ggf. verarbeitet, und die Autorisierungsdaten oder das Ergebnis der Verarbeitung an den Chip gesandt, um nachzuweisen, dass Kenntnis von den Autorisierungsdaten erlangt worden ist. Als ein einfaches Beispiel von Autorisierungsdaten kann beispielsweise die aufgedruckte Seriennummer des Reisepasses dienen. Soll bei diesem Beispiel auf den Chip zugegriffen werden, um die Identifikationsdaten auszulesen, muss zuerst die aufgedruckte Seriennummer aus dem maschinenlesbaren Feld optisch ausgelesen werden. Gemäß einer ersten Alternative liest eine Kontrollperson die Seriennummer mit dem Auge ab und gibt das abgelesene Ergebnis - z.B. über eine Tastatur - in ein Terminal ein, das mit dem Chip kommunizieren kann. Gemäß einer zweiten Alternative wird die Seriennummer maschinell optisch ausgelesen und mittels Zeichenerkennung erkannt und das erkannte Ergebnis an ein Terminal zur Kommunikation mit dem Chip übertragen. Das Terminal sendet in beiden Fällen die zuvor gelesene und erkannte Seriennummer an den Chip und kann, sofern die gesendete Seriennummer zum Chip passt (z.B., weil die gesendete Seriennummer mit einer im Chip abgespeicherten Seriennummer übereinstimmt), auf den Chip zugreifen. Die beschriebene Absicherung des Reisepasses mit Chip mit Autorisierungsdaten wird auch als "Basic Access Control" bezeichnet. Die Autorisierungsdaten werden auch als "Basic Access Control Key" bezeichnet. Bei einem solchen Identifikationssystem ist stets ein optisches Auslesen der aufgedruckten Autorisierungsdaten, ein Erkennen der ausgelesenen Autorisierungsdaten und ein Übertragen von Daten, um die Kenntnis der Autorisierungsdaten zu beweisen, an das Terminal erforderlich. Vor allem das optische Auslesen und das Erkennen der aufgedruckten Autorisierungsdaten sind fehleranfällig. Zudem ist das Auslesen von Identifikationsdaten bei dem herkömmlichen Reisepass mit Chip umständlich, da - zusätzlich zu einem Chipkartenlesegerät zum Zugreifen auf den Chip - zum Auslesen der Autorisierungsdaten entweder eine Kontrollperson oder ein optisches Lesegerät mit nachgeschalteter Zeichenerkennung erforderlich sind.

Ausgehend hiervon liegt der Erfindung die Aufgabe zu Grunde, ein einfaches, zuverlässiges und wenig fehleranfälliges Identifikationssystem zu schaffen. Verfahren und Verwendungen zu dem Identifikationssystem sollen ebenfalls angegeben werden.

Die Aufgabe wird gelöst durch ein Identifikationssystem nach Anspruch 1, sowie durch ein Verfahren nach einem der unabhängigen Verfahrensansprüche. Eine erfindungsgemäße Verwendung ist in Anspruch 21 angegeben. Vorteilhafte Ausgestaltungen der Erfindung sind in den abhängigen Ansprüchen angegeben.

Das erfindungsgemäße Identifikationssystem gemäß dem unabhängigen Anspruch 1 ist mit einem Identifikationsdokument ausgestattet, das einen ersten elektronischen Speicher aufweist, sowie mit Autorisierungsdaten zum Zugreifen auf den elektronischen Speicher. Gemäß der Erfindung sind die Autorisierungsdaten in elektronischer Form vorgesehen. Dadurch, dass die Autorisierungsdaten in elektronischer Form vorgesehen sind, können sie durch ein elektronisches Prüfsystem ausgelesen werden. Ein optisches Auslesen aufgedruckter maschinenlesbarer Autorisierungsdaten mit einer nachfolgenden aufwändigen Zeichenerkennung und Umwandlung des erkannten Leseergebnisses in elektronische Autorisierungsdaten, wie es aus dem Stand der Technik bekannt ist, ist nicht erforderlich. Folglich sind optische Lesegeräte und Zeichenerkenner, wie sie beim Stand der Technik erforderlich sind, nicht notwendig. Ein rein elektronisches Prüfgerät, mit dem sich sowohl die Autorisierungsdaten aus dem zweiten Speicher als auch Daten wie z.B. Identifikationsdaten aus dem ersten Speicher auslesen lassen, genügt. Ein solches rein elektronisch funktionierendes Prüfgerät vermeidet die Fehleranfälligkeit der herkömmlichen Prüfgeräte beim optischen Auslesen und beim Erkennen von optisch ausgelesenen aufgedruckten Autorisierungsdaten und ist zudem einfacher und folglich auch kostengünstiger.

Daher ist gemäß Anspruch 1 ein einfaches, zuverlässiges und wenig fehleranfälliges Identifikationssystem geschaffen.

Als Autorisierungsdaten können insbesondere vorgesehen sein: eine PIN (personal identification number), ein Passwort, ein kryptographischer Schlüssel, Schlüsselableitungsdaten, aus denen sich ein kryptographischer Schlüssel ableiten lässt, biometrische Daten.

Biometrische Daten können im Zusammenhang mit der Erfindung, unabhängig davon, in welcher Funktion sie eingesetzt werden, beispielsweise umfassen: Fingerabdruckdaten, Daten eines digitalisierten Bildes einer Person, aus einem solchen Bild abgeleitete Daten, Irisdaten, Handformdaten, Gesichtsformdaten etc..

Zusätzlich zu den Autorisierungsdaten in elektronischer Form können Autorisierungsdaten in herkömmlicher Form vorgesehen sein, um eine Rückwärtskompatibilität des erfindungsgemäßen Identifikationssystems mit älteren Identifikationssystemen und mit älteren Systemen zur Überprüfung von Identifikationssystemen zu gewährleisten.

Bei dem erfindungsgemäßen Verfahren zum Auslesen von Identifikationsdaten aus einem Identifikationsdokument, das als Identifikationsdokument in einem erfindungsgemäßen Identifizierungssystem integriert ist, werden die Autorisierungsdaten aus dem zweiten Speicher ausgelesen. Anschließend werden unter Verwendung der ausgelesenen Autorisierungsdaten die Identifikationsdaten aus dem ersten Speicher ausgelesen.

Die Autorisierungsdaten können zum Auslesen der Identifikationsdaten auf unterschiedliche Weisen verwendet werden. Beispielsweise werden die Autorisierungsdaten direkt zur Verfügung gestellt, um mit vorabgespeicherten Referenz-Autorisierungsdaten verglichen zu werden, z.B. durch einen Mikroprozessor des Identifizierungssystems. Falls die ausgelesenen Autorisierungsdaten mit den vorabgespeicherten Autorisierungsdaten übereinstimmen, wird der Zugriff auf den ersten Speicher gewährt, andernfalls verwehrt. Auf die beschriebene Weise können beispielsweise Autorisierungsdaten in Gestalt von Passwörtern, PINs, biometrischen Daten oder dergleichen verwendet werden. Alternativ wird aus den Autorisierungsdaten ein Verarbeitungsergebnis erzeugt, z.B. ein Authentisierungstoken. Dieses Verarbeitungsergebnis wird zur Verfügung gestellt, z.B. an einen Mikroprozessor des Identifizierungssystems, und überprüft, woraufhin der Zugriff auf den ersten Speicher gewährt oder verwehrt wird.

Das erfindungsgemäße Verfahren zum Auslesen von Identifikationsdaten wird gemäß einer ersten Variante der Erfindung, die in Anspruch 11 ange-geben ist, zur automatisierten Aufenthaltsverfolgung eingesetzt, um zu verifizieren, dass eine Person oder Maschine, die ein erfindungsgemäßes Identifizierungssystem mit sich führt, wenigstens eine vorbestimmte Kontrollstation aufsucht. Zur Aufenthaltsverfolgung wird an der Kontrollstation eine Überwachung durchgeführt, mit der erfindungsgemäße Identifikationssysteme detektierbar sind. Nachdem ein solches Identifizierungssystem detektiert worden ist, werden gemäß dem erfindungsgemäßen Verfahren - d.h. insbesondere mit vorherigem elektronischem Auslesen der elektronischen Autorisierungsdaten - Identifikationsdaten aus dem ersten Speicher ausgelesen. In Abhängigkeit von den ausgelesenen Identifikationsdaten wird verifiziert, dass durch die Person oder Maschine die Kontrollstation aufgesucht worden ist.

Gemäß einer zweiten Variante der Erfindung, die in Anspruch 12 angegeben ist, wird ein Verfahren zur automatisierten Zugangskontrolle zu einem zugangsgesicherten Bereich angegeben. Bei diesem Verfahren zur automatisierten Zugangskontrolle wird an einer Kontrollstelle für den Zugang zu dem zugangsgesicherten Bereich ein erfindungsgemäßes Identifizierungssystem bereitgehalten. Anschließend werden gemäß dem erfindungsgemäßen Verfahren - d.h. insbesondere mit vorherigem elektronischem Auslesen der elektronischen Autorisierungsdaten - Identifikationsdaten aus dem ersten Speicher ausgelesen. In Abhängigkeit von den ausgelesenen Identifikationsdaten wird der Zugang zum zugangsgesicherten Bereich gewährt oder verwehrt.

Der zugangsgesicherte Bereich kann ein räumlicher Bereich sein oder ein Datenbereich in einem Computersystem, beispielsweise einem PC oder einem Computernetzwerk. Als räumlicher Bereich kann ein Gebäude, Schrank, Safe, Kraftfahrzeug - z.B. PKW, LKW oder Bus - , eine Gebäudeanlage, ein fahrscheinpflichtiger räumlicher Bereich eines öffentlichen Verkehrsmittels oder eines Gebäudesystems oder Anlagensystems (z.B. Wartezonen und Bahnsteige) im Zusammenhang mit öffentlichen Verkehrsmitteln oder dergleichen vorgesehen sein. Der zugangsgesicherte Bereich ist vorzugsweise durch ein Schließsystem gegen unbefugten Zugang gesichert. Das Schließ-system kann mechanisch, elektronisch oder kombiniert mechanischelektronisch sein. Als Schließsystem kann - je nach Art des zugangsgesicherten Bereichs - beispielsweise ein zumindest überwiegend mechanisches Schließsystem wie z.B. eine Schranke, Tür, Drehkreuz etc. vorgesehen sein, oder beispielsweise eine rein elektronische Sperre wie z.B. Firewall in einem Computersystem etc. vorgesehen sein.

Gemäß einer dritten Variante der Erfindung, die in Anspruch 13 angegeben ist, wird ein Verfahren zur automatisierten Zugangskontrolle zu einem zugangsgesicherten Bereich angegeben. Hierbei wird an einer Kontrollstelle für den Zugang zu dem zugangsgesicherten Bereich ein Identifikationsdokument mit einem ersten elektronischen Speicher an der Kontrollstelle bereitgehalten. Anschließend werden Identifikationsdaten aus dem ersten Speicher ausgelesen. In Abhängigkeit von den ausgelesenen Identifikationsdaten wird der Zugang zum zugangsgesicherten Bereich gewährt oder verwehrt.

Gemäß einer vierten Variante der Erfindung, die in Anspruch 20 angegeben ist, wird ein Verfahren zur automatisierten Aufenthaltsverfolgung angegeben. Bei dem Verfahren werden Identifikationsdaten aus einem Speicher eines Identifikationsdokuments ausgelesen. In Abhängigkeit von den ausgelesenen Identifikationsdaten wird verifiziert, dass durch die Person oder Maschine ein oder mehrere vorbestimmte Kontrollstationen aufgesucht worden sind.

Gemäß einer in Anspruch 21 angegebenen Weiterbildung der Erfindung wird von einem Identifikationsdokument ausgegangen, durch das ein Teil einer externen Authentisierungs-Infrastruktur für eine externe Anwendung gebildet ist. Gemäß der Weiterbildung wird das Identifikationsdokument bei einem Verfahren zum Auslesen von Identifikationsdaten angegeben, für welches die externe Authentisierungs-Infrastruktur ursprünglich nicht vorgesehen ist. Eine Authentisierungs-Infrastruktur ist aufwändig einzurichten und zu betreiben. Gemäß der Weiterbildung wird eine ohnehin vorhandene Authentisierungs-Infrastruktur dazu verwendet, gesichert Identitätsdaten aus dem Identifikationsdokument auszulesen. Daher hat die Weiterbildung den Vorteil, dass für das Auslesen der Identifikationsdaten keine gesonderte Authentisierungs-Infrastruktur vorgesehen zu werden braucht. Das Auslesen der Identifikationsdaten wird vorzugsweise insbesondere bei der Zugangskontrolle oder Aufenthaltsverfolgung eingesetzt. Die externe Anwendung kann beispielsweise die eines Ausweisdokuments wie z.B. Reisepasses oder Personalausweises sein. Alternativ kann die externe Anwendung die einer Kreditkarte, Signaturkarte, PKI-Karte (Public-Key-Infrastructure-Karte, d.h. Karte mit Public-Key-Infrastruktur), Gesundheitskarte oder dergleichen sein. Die Weiterbildung ist bei jedem erfindungsgemäßen Identifizierungssystem bzw. Verfahren anwendbar, einschließlich Zugangskontrolle und Aufenthaltsverfolgung, einschließlich der angeführten Alternativen. Insbesondere kann bei der Verwendung aus Anspruch 21 an Stelle des Identifikationsdokuments jedes der erfindungsgemäßen Identifikationssysteme mit einem Identifikationsdokument verwendet werden. Wahlweise wird bei der Weiterbildung als Identifikationsdaten ein Schlüssel aus einem Schlüsselpaar der Authentisierungsinfrastruktur verwendet.

Im Folgenden wird auf vorteilhafte Ausgestaltungen der Erfindung näher eingegangen.

Die Autorisierungsdaten in elektronischer Form sind vorzugsweise in einem zweiten elektronischen Speicher vorgesehen. Der zweite Speicher kann beispielsweise ein integrierter Schaltkreis oder ein Magnetstreifen sein.

Gemäß einer ersten Ausgestaltung sind die Autorisierungsdaten in einem mit dem Identifikationsdokument fest verbundenen Autorisierungsdokument vorgesehen. Beispielsweise ist das Autorisierungsdokument auf das Identifikationsdokument aufgetragen, aufgedruckt oder aufgeprägt oder in das Identifikationsdokument eingelassen. Gemäß einer bevorzugten Ausgestaltung weist das Autorisierungsdokument als zweiten Speicher einen auf, an oder in dem Identifikationsdokument angebrachten Magnetstreifen oder integrierten Schaltkreis auf. Beispielsweise besteht das Autorisierungsdokument lediglich aus einem mit dem Identifikationsdokument fest verbundenen Magnetstreifen, der z.B. wie bei einer herkömmlichen Magnetstreifenkarte auf das Identifikationsdokument aufgebracht ist.

Gemäß einer zweiten Ausgestaltung sind die Autorisierungsdaten in einem vom Identifikationsdokument gesonderten Autorisierungsdokument vorgesehen. Bei dieser zweiten Ausgestaltung kann als Autorisierungsdokument beispielsweise eine gesonderte Chipkarte - aus Papier, Kunststoff oder einem sonstigen Material - oder ein sonstiger Datenträger wie z.B. ein volumiger Token vorgesehen sein. Die Chipkarte, die als Autorisierungsdokument verwendet wird, kann eine eigens für das Bereitstellen der Autorisierungsdaten vorgesehene Chipkarte sein. Alternativ kann als Chipkarte, die als Autorisierungsdokument verwendet wird, eine Teilnehmerkarte für ein Mobilfunksystem vorgesehen sein, wobei als Autorisierungsdaten beispielsweise Teilnehmerdaten für das Mobilfunksystem verwendet werden.

Als erster Speicher ist wahlweise ein integrierter Schaltkreis oder Magnetstreifen vorgesehen. Vorzugsweise ist der erste Speicher ein integrierter Schaltkreis und das Identifikationsdokument weist einen Chip mit einem Mikroprozessor auf, der auf den ersten Speicher zugreifen kann.

Gemäß einer bevorzugten Ausführungsform der Erfindung ist das Identifikationsdokument als Ausweisdokument, insbesondere Reisepass oder Personalausweis, gestaltet. Insbesondere kann das Identifikationsdokument ein solches Ausweisdokument mit einem integrierten Schaltkreis sein, in dem Identifikationsdaten mit einem Bezug zum Inhaber des Ausweisdokuments abgelegt sind. Das Ausweisdokument kann wahlweise zusätzlich herkömmliche aufgedruckte Autorisierungsdaten aufweisen, beispielsweise aufgedruckte Autorisierungsdaten in einem maschinenlesbaren Feld.

Wahlweise ist der zweite Speicher zugriffsgesichert. Der zweite Speicher kann beispielsweise durch biometrische Daten, eine PIN (personal identification number = persönliche Identifikationsnummer), ein Passwort oder dergleichen gesichert sein. Dabei sind die Autorisierungsdaten erst nach erfolgreicher Eingabe der richtigen biometrischen Daten bzw. der richtigen PIN bzw. des richtigen Passworts zugänglich.

Vorzugsweise weist das Identifikationsdokument Kontaktmittel zur, insbesondere kontaktlosen, Kontaktierung des ersten Speichers auf, beispielsweise eine Antenne wie sie bei kontaktlosen Chipkarten oder in Reisepässen mit Chip vorgesehen ist. Wahlweise ist auch das Autorisierungsdokument über das Kontaktmittel kontaktierbar, insbesondere falls das Autorisierungsdokument fest mit dem Identifikationsdokument verbunden ist. Alternativ kann das Autorisierungsdokument ein gesondertes Kontaktmittel aufweisen, beispielsweise eine gesonderte Antenne. Beispielsweise ist das Identifikationsdokument mit einem ersten Chip als dem ersten Speicher ausgestattet und mit einem zweiten Chip als dem zweiten Speicher, und beide Chips sind über eine im Identifikationsdokument integrierte Antenne kontaktierbar. Alternativ ist nur der Chip mit dem ersten Speicher über eine Antenne kontaktierbar und der zweite Speicher ist als Magnetstreifen auf dem Identifikationsdokument verwirklicht.

Bei einer Ausgestaltung eines erfindungsgemäßen Verfahrens wird mit den Identifikationsdaten ein Altersmerkmal aus dem ersten Speicher ausgelesen, das für das Alter einer Person spezifisch ist, der die Identifikationsdaten zugeordnet sind. Diese Ausgestaltung ist beispielsweise bei der Zugangskontrolle vorteilhaft. Zusammen mit den Identifikationsdaten wird das Altersmerkmal ausgelesen. Nur wenn das Altersmerkmal vorbestimmten Alterskriterien für den Zugang zum zugangsgesicherten Bereich genügt, kann der Zugang gewährt werden. Genügt das Altersmerkmal den vorbestimmten Alterskriterien nicht, wird der Zugang zum zugangsgesicherten Bereich unabhängig von den Identitätsdaten verwehrt.

Gemäß einer bevorzugten Ausführungsform werden die ausgelesenen Identifikationsdaten anhand von vorab registrierten Referenz-Identifikationsdaten aus einer Datenbank überprüft. In der Datenbank sind beispielsweise zugangsberechtigte Personen registriert, die Zutritt zu einem zugangsgesicherten Bereich haben. Alternativ können in der Datenbank Personen registriert sein, die verfolgt werden sollen. Zu solchen zu verfolgenden Personen kann beispielsweise Wachpersonal zählen, das einen Rundgang in einem Gebäude durchführen soll. Alternativ können zu den zu verfolgenden Personen die folgenden zählen: Kunden in einem Kaufhaus, deren Kaufverhalten verfolgt werden soll, ehemalige Ladendiebe in einem Kaufhaus, ehemalige Schwarzfahrer im öffentlichen (Nah-)Verkehr.

Beispielsweise werden die Identifikationsdaten mit den Referenz-Identifikationsdaten verglichen. Alternativ wird als Identifikationsdaten ein Schlüssel verwendet, mit dem das Identifikationsdokument Prüfdaten, die ihm zuvor zugesandt wurden, verschlüsselt. Der passende Gegen-Schlüssel zum Entschlüsseln der verschlüsselten Prüfdaten wird in diesem Fall als Referenz-Identifikationsdaten verwendet.

Gemäß einer Ausgestaltung von Ausführungsformen mit Referenz-Identifikationsdaten werden Referenz-Identifikationsdaten zu mindestens einem vorbestimmten Identifizierungssystem in die Datenbank gespeichert, wobei zum Freischalten des Speicherns der Referenz-Identifikationsdaten in die Datenbank ein von dem Identifikationsdokument gesondertes Administrations-Dokument mit einem elektronischen Speicher verwendet wird. Mit dem Administrations-Dokument können beispielsweise die Referenz-Identifikationsdaten neuer zugangsberechtigter Personen oder neuer zu verfolgender Personen in die Datenbank eingespeist werden. Dabei ist die Datenbank durch das Erfordernis des Administrations-Dokuments gegen unzulässiges Einspeisen von Referenz-Identifikationsdaten gesichert.

An Stelle von Referenz-Identifikationsdaten aus einer Datenbank können zum Überprüfen der im ersten Speicher abgespeicherten Identifikationsdaten alternativ neu erstellte Identifikationsdaten verwendet werden. Beispielsweise sind im ersten Speicher des Identifikationsdokuments als Identifikationsdaten biometrische Daten des Inhabers des Identifikationsdokuments abgespeichert. Die biometrischen Daten werden aus dem ersten Speicher ausgelesen. Zur Überprüfung der ausgelesenen biometrischen Daten werden die biometrischen Daten des Inhabers des Identifikationsdokuments erneut aufgenommen und schließlich die ausgelesenen biometrischen Daten an Hand der erneut aufgenommenen biometrischen Daten überprüft. Wahlweise können zur Überprüfung der Identifikationsdaten neu erstellte Identifikationsdaten zusätzlich zu Referenz-Identifikationsdaten aus einer Datenbank herangezogen werden.

Im folgenden wird die Erfindung an Hand von Ausführungsbeispielen und unter Bezugnahme auf die Zeichnung näher erläutert, in der zeigen:
- Fig. 1: einen Reisepass mit Chip und eine zugehörige gesonderte Autorisierungskarte mit Autorisierungsdaten zum Zugreifen auf den Chip, gemäß einer ersten Ausführungsform eines Identifizierungssystems gemäß der Erfindung;
- Fig. 2: einen Personalausweis mit Chip und mit einem auf der Rückseite aufgebrachten Magnetstreifen mit Autorisierungsdaten zum Zugreifen auf den Chip, gemäß einer zweiten Ausführungsform eines Identifizierungssystems gemäß der Erfindung;
- Fig. 3: einen Wegverlauf in einem zu überwachenden Gebäudekomplex mit einer Mehrzahl von Kontrollstationen, die eine Kontrollperson auf ih- rem Kontrollgang durch das Gebäude zu passieren hat, zur Veranschaulichung einer Aufenthaltsverfolgung gemäß einer Ausführungsform eines erfindungsgemäßen Verfahrens;
- Fig. 4: ein Schließsystem und ein Identifikationssystem, mit dem sich das Schließsystem betätigen lässt, zur Veranschaulichung einer Zugangskontrolle gemäß einer Ausführungsform eines erfindungsgemäßen Verfahrens;
- Fig. 5: ein Flussdiagramm zur Veranschaulichung eines Verfahrens zur Zugangskontrolle, bei dem als Identifizierungssystem ein Reisepass mit Chip verwendet wird, wobei als Identifizierungsdaten ein kryptographischer Schlüssel verwendet wird, gemäß einer Ausführungsform der Erfindung.

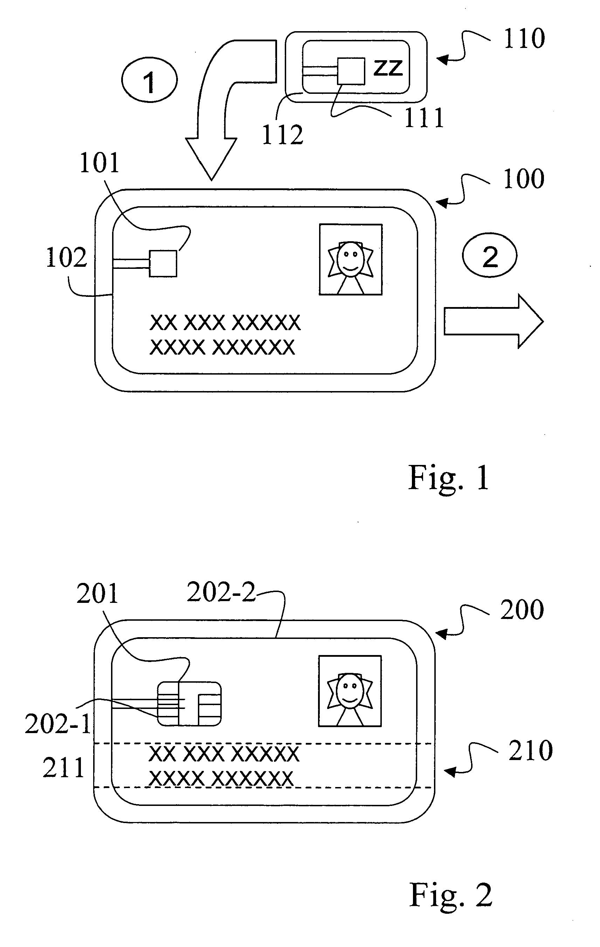

Fig. 1 zeigt eine erste Ausführungsform eines Identifizierungssystems gemäß der Erfindung. Das Identifizierungssystem umfasst - als Identifizierungsdokument - einen Reisepass 100 mit einem Chip 101 und einer Antenne 102 zur kontaktlosen Kontaktierung des Chips 101. Weiter umfasst das Identifizierungssystem eine zum Reisepass 100 gehörige Autorisierungskarte 110 mit einem Chip 111 und einer Antenne 112 zur kontaktlosen Kontaktierung des Chips 111. Im Chip 101 des Reisepasses 100 sind Identifikationsdaten des Passinhabers abgespeichert. Im Chip 111 der Autorisierungskarte 110 sind Autorisierungsdaten zum Zugreifen auf den Chip 101 des Reisepasses 100 abgespeichert.

Fig. 2 zeigt eine zweite Ausführungsform eines Identifizierungssystems gemäß der Erfindung. Das Identifizierungssystem umfasst - als Identifizierungsdokument - einen Personalausweis 200 mit einem Chip 201, einer Antenne 202-2 zur kontaktlosen Kontaktierung des Chips 201 und einem Kontaktfeld 202-1 zur kontaktbehafteten Kontaktierung des Chips 201, sowie - als Autorisierungsdokument - einen auf der Rückseite des Personalausweises 200 aufgebrachten Magnetstreifen 211 mit Autorisierungsdaten zum Zugreifen auf den Chip 201. Durch den Magnetstreifen 211 ist ein in den Personalausweis 200 integriertes Autorisierungsdokument 210 gebildet, mit dem sich der Zugriff auf Identifikationsdaten im Chip 201 freischalten lässt. Wahlweise kann an dem Personalausweis 200 nur ein Kontaktfeld 202-1 oder nur eine Antenne 202-2 vorgesehen sein.

Zum Auslesen von Identifikationsdaten aus dem Reisepass 100 aus Fig. 1 werden in einem ersten Schritt (1) mittels der Antenne 112 der Autorisierungskarte 110 die erforderlichen Autorisierungsdaten aus dem Chip 111 der Autorisierungskarte 110 ausgelesen. Die ausgelesenen Autorisierungsdaten werden ggf. verarbeitet, um ein Verarbeitungsergebnis zu erzeugen, wobei dies z.B. in dem Fall durchgeführt wird, falls als Autorisierungsdaten ein kryptographischer Schlüssel oder Schlüsselerzeugungsdaten zum Erzeugen eines solchen kryptographischen Schlüssels vorgesehen sind. Alternativ, z.B. falls als Autorisierungsdaten eine PIN, biometrische Daten oder ein Passwort vorgesehen sind, können die Autorisierungsdaten wahlweise direkt, also ohne weitere Verarbeitung, oder mit einer weiteren Verarbeitung wie z.B. Verschlüsselung verwendet werden. Die Autorisierungsdaten oder das mit den Verarbeitungsdaten erzeugte Verarbeitungsergebnis werden über die Antenne 102 des Reisepasses 100 an den Chip 101 des Reisepasses 100 übertragen. Sofern die Autorisierungskarte 110 zum Reisepass 100 gehört, ist nun der Chip 101 zum Auslesen freigegeben, und die Identifikationsdaten können in einem zweiten Schritt (2) aus dem Chip 101 ausgelesen werden.

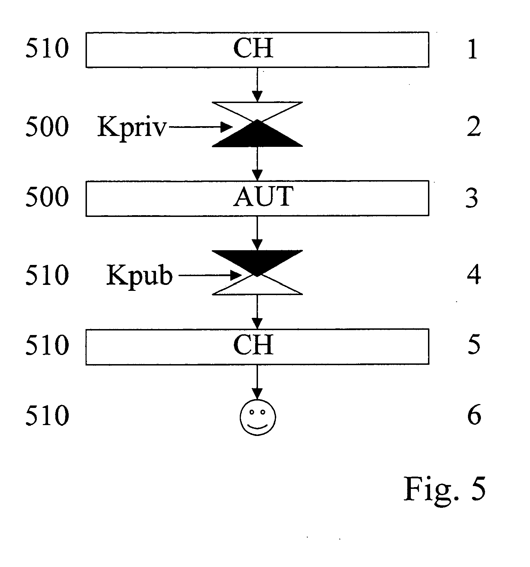

Als Verarbeitungsergebnis, das an den Chip 101 gesandt wird, kann beispielsweise ein Authentisierungstoken verwendet werden, das analog dem in Fig. 5 dargestellten Verfahren erzeugt wird. Hierbei wird ein privater Schlüssel Kpriv aus einem asymmetrischen Schlüsselpaar als Autorisierungsdaten verwendet. Mit den Autorisierungsdaten Kpriv werden Prüfdaten CH (Challenge) zu einem Authentisierungstoken AUT (Verarbeitungsergebnis) verschlüsselt. Im Chip 101 des Reisepasses 100 ist ein öffentlicher Schlüssel Kpub aus einem asymmetrischen Schlüsselpaar abgespeichert. Sofern der öffentliche Schlüssel Kpub zum privaten Schlüssel Kpriv gehört, mit dem AUT erzeugt wurde, entschlüsselt ein Mikroprozessor des Chips 101 nun das Verarbeitungsergebnis AUT, um die Prüfdaten CH zu rekonstruieren, und der Zugriff auf die Identifikationsdaten wird gewährt. Statt eines asymmetrischen Schlüsselpaars kann auch ein symmetrisches Schlüsselpaar verwendet werden (vgl. auch Fig. 5).

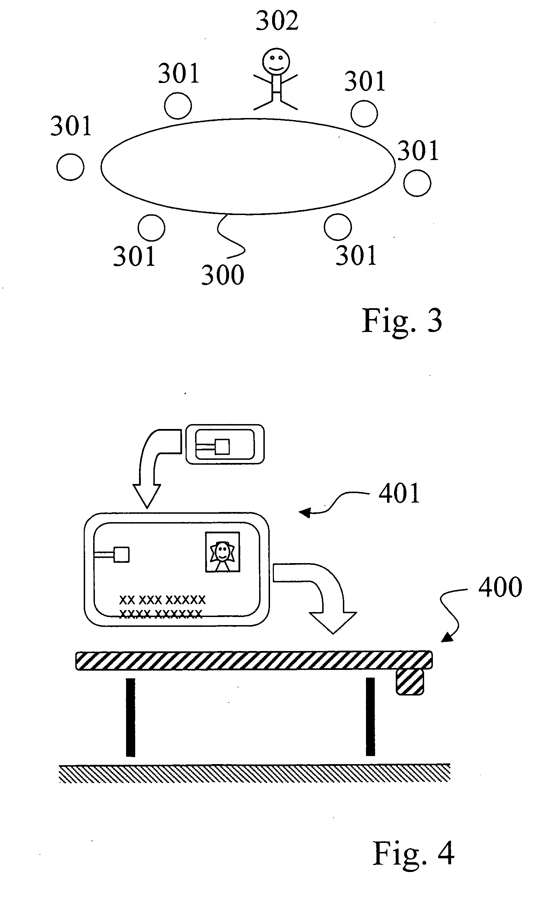

Fig. 3 veranschaulicht ein Verfahren zur Personenüberwachung, gemäß einer Ausführungsform eines erfindungsgemäßen Verfahrens. Fig. 3 zeigt einen Wegverlauf 300 in einem zu überwachenden Gebäudekomplex (nicht dargestellt). Entlang des Wegverlaufs 300 sind eine Mehrzahl von Kontrollstationen 301 vorgesehen, die eine Kontrollperson 302 auf ihrem Kontrollgang durch das Gebäude zu passieren hat. Mit dem Verfahren soll verifiziert werden, dass die Kontrollperson 302 auf ihrem Kontrollgang tatsächlich die vorgeschriebenen Kontrollstationen 301 passiert. Die Kontrollperson 302 führt ein Identifikationssystem mit einem Identifikationsdokument und einem Autorisierungsdokument mit sich, beispielsweise ein Identifikationssystem wie das in Fig. 1 oder Fig. 2 dargestellte. Bei jeder Kontrollstation 301, die die Kontrollperson 302 passiert, bringt die Kontrollperson 302 ihr Identifikationssystem mit einem Lesegerät der Kontrollstation 301 in Leseverbindung. Daraufhin liest das Lesegerät zunächst die Autorisierungsdaten aus dem Autorisierungsdokument - z.B. der Autorisierungskarte bzw. dem Magnetstreifen - aus. Mit den Autorisierungsdaten werden Identifikationsdaten aus dem Identifikationsdokuments ausgelesen. Die ausgelesenen Identifikationsdaten werden anhand von Referenz-Identifikationsdaten aus einer Datenbank, auf die das Lesegerät Zugriff hat, überprüft. Werden zu den ausgelesenen Identifikationsdaten passende Referenz-Identifikationsdaten gefunden, wird in der Datenbank vermerkt, dass die Kontrollperson 302, der die Referenz-Identifikationsdaten entsprechen, die Kontrollstation 301 passiert hat.

Gemäß einer Variante der in Fig. 3 veranschaulichten Personenüberwachung sind an den Kontrollstationen zusätzlich Aufnahmegeräte zum Aufnehmen von neuen Identifikationsdaten vorgesehen, z.B. Aufnahmegeräte für biometrische Daten, z.B. Fingerabdrucksensoren, Irisscanner, Kameras etc. Als Identifikationsdaten werden entsprechend z.B. biometrische Daten verwendet, z.B. Fingerabdruckdaten, Irisdaten, Gesichtsformdaten, Handformdaten etc.. Bei dieser Variante werden an einer jeweiligen Kontrollstation 301 neue Identifikationsdaten der Kontrollperson 302 aufgenommen. Die neu aufgenommenen Identifikationsdaten werden mit Identifikationsdaten aus dem Identifikationssystem und/oder mit Referenz-Identifikationssystem aus einer Datenbank verglichen. Bei dieser Variante kann beispielsweise verhindert werden, dass eine andere Person als die Kontrollperson 302 vertretungsweise den Kontrollgang durchführt.

Fig. 4 veranschaulicht eine Zugangskontrolle gemäß einer Ausführungsform eines erfindungsgemäßen Verfahrens. Fig. 4 zeigt ein Schließsystem 400 und ein Identifikationssystem 401, mit dem sich das Schließsystem 400 öffnen lässt. Das Schließsystem 400 ist als Schranke an einem Kontrollpunkt zu einem zugangsgesicherten Bereich ausgebildet. Das Identifikationssystem 401 kann beispielsweise wie die in Fig. 1 oder Fig. 2 dargestellten ausgebildet sein und ist mit einem Identifikationsdokument und einem Autorisierungsdokument ausgestattet. Eine Person, die am Schließsystem 400 in den zugangsgesicherten Bereich gelangen möchte, bringt ihr Identifikationssystem in Lesekontakt mit einem Lesegerät des Schließsystems 400. Daraufhin liest das Lesegerät zunächst die Autorisierungsdaten aus dem Autorisierungsdokument aus. Mit den Autorisierungsdaten werden Identifikationsdaten aus dem Identifikationsdokument ausgelesen. Die ausgelesenen Identifikationsdaten werden anhand von Referenz-Identifikationsdaten aus einer Datenbank, auf die das Lesegerät Zugriff hat, geprüft. Werden zu den ausgelesenen Identifikationsdaten passende Referenz-Identifikationsdaten gefunden, wird überprüft, ob die zugehörige Person berechtigt ist, den zugangsgesicherten Bereich zu betreten. Falls ja, wird das Schließsystem geöffnet. Falls nein, oder falls keine passenden Referenz-Identifikationsdaten gefunden werden, bleibt das Schließsystem 400 geschlossen.

Fig. 5 zeigt ein Flussdiagramm zur Veranschaulichung eines erfindungsgemäßen Verfahrens zur Zugangskontrolle an einem Schließsystem 510. Als Identifizierungssystem wird ein Reisepass 500 mit Chip verwendet. Der Chip weist einen Mikroprozessor und ein oder mehrere für den Mikroprozessor zugängliche Speicher auf. Der Reisepass 500 ist in eine Authentisierungs-Infrastruktur integriert, die ursprünglich zur Passkontrolle z.B. an Grenz-übergängen vorgesehen ist. Als Identifikationsdaten wird ein privater Schlüssel aus einem asymmetrischen Schlüsselpaar verwendet. (Alternativ kann ein symmetrisches Schlüsselpaar vorgesehen sein). Der private Schlüssel ist in einem Speicher des Chips des Reisepasses 500 abgelegt. In einer Datenbank des Schließsystems 510 ist als Referenz-Identifikationsdaten zu dem Reisepass 500 der zum privaten Schlüssel passende öffentliche Schlüssel abgespeichert. Der Reisepass 500 wird in Lesekontakt mit einem Lesegerät des Schließsystems 510 gebracht. Nun prüft das Schließsystem 510 die Identifikationsdaten (den privaten Schlüssel) im Reisepass 500. Hierzu sendet das Schließsystem 510 in einem Schritt 1 Prüfdaten CH (Challenge) an den Chip des Reisepasses 500. Der Chip des Reisepasses 500 verschlüsselt in einem Schritt 2 die Prüfdaten CH mit dem privaten Schlüssel und sendet in einem Schritt 3 das Verschlüsselungsergebnis als Authentisierungstoken AUT an das Schließsystem 510. Hiermit ist das Auslesen der Identifikationsdaten abgeschlossen. In einem Schritt 4 sucht das Schließsystem 510 nach dem öffentlichen Schlüssel zum Entschlüsseln des Authentisierungstokens AUT und entschlüsselt ggf. mit dem öffentlichen Schlüssel das Authentisierungstoken AUT, um in einem Schritt 5 die Prüfdaten CH wiederherzustellen und in einem Schritt 6 den Zugang zu gewähren. Wird hingegen kein passender öffentlicher Schlüssel gefunden, um das Authentisierungstoken AUT zu entschlüsseln, wird der Zugang verwehrt.

Wahlweise muss das Schließsystem 510, bevor es das Authentisierungstoken AUT mit den Identifikationsdaten auslesen kann, Autorisierungsdaten oder ein mit Autorisierungsdaten erzeugtes Verarbeitungsergebnis an den Chip des Reisepasses 500 senden. Gemäß einer ersten Alternative sind die Autorisierungsdaten auf den Reisepass 500 aufgedruckt, wie weiter oben beschrieben ist, und das Schließsystem 510 liest die Autorisierungsdaten optisch vom Reisepass 500 ab. Gemäß einer zweiten Alternative sind die Autorisierungsdaten in elektronischer Form vorgesehen, wie weiter oben beschrieben ist, und das Schließsystem 510 liest die Autorisierungsdaten elektronisch aus. Der Chip des Reisepasses 500 erkennt ggf. die Autorisierungsdaten als richtig bzw. erkennt aus dem Verarbeitungsergebnis, dass die richtigen Autorisierungsdaten zum Erzeugen des Verarbeitungsergebnisses zur Verfügung standen, und das in Fig. 5 dargestellte Auslesen der Identifikationsdaten wird gestartet. Die ggf. elektronisch vorgesehenen Autorisierungsdaten können wahlweise nach einem analogen Verfahren wie dem in Fig. 5 veranschaulichten überprüft werden.

## Patentansprüche

1. Identifizierungssystem mit einem einen ersten elektronischen Speicher (101; 201) aufweisenden Identifikationsdokument (100; 200) und mit Autorisierungsdaten zum Zugreifen auf den elektronischen Speicher (101; 201), wobei Autorisierungsdaten in elektronischer Form vorgesehen sind.

2. Identifizierungssystem nach Anspruch 1, wobei die Autorisierungsdaten in einem zweiten elektronischen Speicher (111; 211) vorgesehen sind.

3. Identifizierungssystem nach Anspruch 1 oder 2, wobei die Autorisierungsdaten in einem mit dem Identifikationsdokument (200) fest verbundenen Autorisierungsdokument (210) vorgesehen sind.

4. Identifizierungssystem nach Anspruch 3, wobei das Autorisierungsdokument (210) als zweiten Speicher einen auf, an oder in dem Identifikationsdokument angebrachten Magnetstreifen (211) oder integrierten Schaltkreis aufweist.

5. Identifizierungssystem nach Anspruch 1 oder 2, wobei die Autorisierungsdaten in einem vom Identifikationsdokument (100) gesonderten Autorisierungsdokument (110) vorgesehen ist.

6. Identifizierungssystem nach einem der Ansprüche 1 bis 5, wobei als erster Speicher (101; 201) ein integrierter Schaltkreis oder Magnetstreifen vorgesehen ist.

7. Identifizierungssystem nach einem der Ansprüche 1 bis 6, wobei das Identifikationsdokument (100; 200) als Ausweisdokument, insbesondere Reisepass oder Personalausweis, gestaltet ist.

8. Identifizierungssystem nach einem der Ansprüche 1 bis 7, wobei der zweite Speicher (111; 211) zugriffsgesichert ist.

9. Identifizierungssystem nach einem der Ansprüche 1 bis 8, wobei das Identifikationsdokument (100; 200) Kontaktmittel (102; 202-1, 202-2) zur Kontaktierung des ersten Speichers (101; 201) aufweist.

10. Verfahren zum Auslesen von Identifikationsdaten aus einem Identifikationsdokument, das als Identifikationsdokument (100; 200) in einem Identifizierungssystem nach einem der Ansprüche 1 bis 9 integriert ist, wobei
- Autorisierungsdaten aus dem zweiten Speicher (111; 211) ausgelesen werden; und
- unter Verwendung der ausgelesenen Autorisierungsdaten Identifikationsdaten aus dem ersten Speicher (101; 201) ausgelesen werden.

11. Verfahren zur automatisierten Aufenthaltsverfolgung, um zu verifizieren, dass eine Person (302) oder Maschine, die ein Identifizierungssystem (100; 200) nach einem der Ansprüche 1 bis 9 mit sich führt, wenigstens eine vorbestimmte Kontrollstation aufsucht, wobei an der Kontrollstation (301)
- eine Überwachung durchgeführt wird, mit der Identifikationssysteme nach einem der Ansprüche 1 bis 9 detektierbar sind, wobei, nachdem ein solches Identifizierungssystem (100; 200) detektiert worden ist,
- gemäß dem Verfahren nach Anspruch 10 Identifikationsdaten aus dem ersten Speicher (101; 201) ausgelesen werden; und
- in Abhängigkeit von den ausgelesenen Identifikationsdaten verifiziert wird, dass durch die Person (302) oder Maschine die Kontrollstation (301) aufgesucht worden ist.

12. Verfahren zur automatisierten Zugangskontrolle zu einem zugangsgesicherten Bereich, wobei an einer Kontrollstelle für den Zugang zu dem zugangsgesicherten Bereich
- ein Identifizierungssystem (401; 100; 200) nach einem der Ansprüche 1 bis 9 bereitgehalten wird;
- gemäß dem Verfahren nach Anspruch 10 Identifikationsdaten aus dem ersten Speicher (101; 201) ausgelesen werden; und
- in Abhängigkeit von den ausgelesenen Identifikationsdaten der Zugang zum zugangsgesicherten Bereich gewährt oder verwehrt wird.

13. Verfahren zur automatisierten Zugangskontrolle zu einem zugangsgesicherten Bereich, wobei an einer Kontrollstelle für den Zugang zu dem zugangsgesicherten Bereich
- ein Identifikationsdokument mit einem ersten elektronischen Speicher bereitgehalten wird;
- Identifikationsdaten aus dem ersten Speicher ausgelesen werden; und
- in Abhängigkeit von den ausgelesenen Identifikationsdaten der Zugang zum zugangsgesicherten Bereich gewährt oder verwehrt wird.

14. Verfahren nach Anspruch 12 oder 13, wobei der zugangsgesicherte Bereich ein durch ein Schließsystem (400) gesicherter räumlicher Bereich ist.

15. Verfahren nach Anspruch 12 oder 13, wobei der zugangsgesicherte Bereich ein Datenbereich in einem Computersystem ist.

16. Verfahren nach einem der Ansprüche 10 bis 15, wobei mit den Identifikationsdaten ein Altersmerkmal aus dem ersten Speicher ausgelesen wird, das für das Alter einer Person spezifisch ist, der die Identifikationsdaten zugeordnet sind.

17. Verfahren nach einem der Ansprüche 10 bis 16, wobei die ausgelesenen Identifikationsdaten anhand von vorab registrierten Referenz-Identifikationsdaten aus einer Datenbank überprüft werden.

18. Verfahren nach Anspruch 17, wobei Referenz-Identifikationsdaten zu mindestens einem vorbestimmten Identifizierungssystem in die Datenbank gespeichert werden, wobei zum Freischalten des Speicherns der Referenz-Identifikationsdaten in die Datenbank ein von dem Identifikationsdokument gesondertes Administrations-Dokument mit einem elektronischen Speicher verwendet wird.

19. Verfahren nach einem der Ansprüche 10 bis 18, wobei die ausgelesenen Identifikationsdaten anhand von erneut aufgenommenen Identifikationsdaten überprüft werden.

20. Verfahren zur automatisierten Aufenthaltsverfolgung, um zu verifizieren, dass eine Person (302) oder Maschine, die ein Identifikationsdokument mit einem elektronischen Speicher mit sich führt, wenigstens eine vorbestimmte Kontrollstation (301) aufsucht, wobei an der Kontrollstation (301)
- eine Überwachung durchgeführt wird, mit der Identifikationsdokumente detektierbar sind, wobei, nachdem ein solches Identifikationsdokument detektiert worden ist,
- Identifikationsdaten aus dem ersten Speicher ausgelesen werden; und
- in Abhängigkeit von den ausgelesenen Identifikationsdaten verifiziert wird, dass durch die Person (302) oder Maschine die Kontrollstation (301) aufgesucht worden ist.

21. Verwendung eines Identifikationsdokuments, durch das ein Teil einer externen Authentisierungs-Infrastruktur für eine externe Anwendung gebildet ist, bei einem Verfahren nach einem der Ansprüche 10 bis 20, für das die externe Authentisierungs-Infrastruktur ursprünglich nicht vorgesehen ist.

22. Verwendung nach Anspruch 21, wobei die externe Authentisierungs-Infrastruktur eine Authentisierungs-Infrastruktur eines Ausweisdokuments, insbesondere Reisepasses oder Personalausweises, ist.

23. Verwendung nach Anspruch 21 oder 22, wobei die Authentisierungs-Infrastruktur ein Schlüsselpaar mit einem im ersten Speicher (101; 201) im Identifikationsdokument (100; 200) abgespeicherten Schlüssel zum Verschlüsseln von Daten und mit einem dazu passenden Gegen-Schlüssel zum Entschlüsseln von mit dem Schlüssel verschlüsselten Daten aufweist, und wobei als Identifikationsdaten der Schlüssel verwendet wird.
